# EUROPÄISCHE PATENTSCHRIFT

(11) **EP 0 922 246 B1**
(45) Veröffentlichungstag und Bekanntmachung des Hinweises auf die Patenterteilung: **11.07.2001**
(21) Anmeldenummer: 97942756.4
(22) Anmeldetag: 28.08.1997
(51) Int. Cl.: G05B 23/02

(54) **VERFAHREN ZUR ANALYSE EINES PROZESSZUSTANDES EINER TECHNISCHEN ANLAGE**
METHOD OF ANALYSIS OF A PROCESS STATE OF A TECHNICAL INSTALLATION
PROCEDE POUR L'ANALYSE D'UN ETAT DE PROCESSUS DANS UNE INSTALLATION TECHNIQUE

(30) Priorität: 29.08.1996 DE 19635033
(43) Veröffentlichungstag der Anmeldung: 16.06.1999
(73) Patentinhaber: SIEMENS AKTIENGESELLSCHAFT, 80333 München (DE)
(72) Erfinder: MEDERER, Hans-Gerd, D-91052 Erlangen (DE); POLITIADIS-BEHRENS, Alexander, D-91315 Höchstadt (DE); ILMBERGER, Hermann, D-83052 Bruckmühl (DE); SCHMITZ, Jürgen, D-85649 Otterloh (DE); THÜRMEL, Sabine, D-82031 Grünwald (DE); REICH, Matthias, D-81737 München (DE)
(86) Internationale Anmeldenummer: DE9701882
(87) Internationale Veröffentlichungsnummer: WO9809205

(56) Entgegenhaltungen:
- EP-A- 0 612 039
- WO-A-96/14612
- US-A- 5 448 722

## Beschreibung

Die Erfindung bezieht sich auf ein Verfahren zur Analyse eines Prozeßzustandes einer technischen Anlage, deren Anlagenteile automatisch überwacht und gesteuert werden. Bei der technischen Anlage kann es sich insbesondere um eine Kraftwerksanlage handeln.

In einer Leitwarte zur Steuerung einer Kraftwerksanlage fallen ständig große Mengen verschiedener Meßdaten an, die in ihrer Gesamtheit den Anlagen- oder Betriebszustand beschreiben. Das Bedienpersonal der Kraftwerksanlage steht vor der Aufgabe, die für den Betriebszustand jeweils relevanten Meßdaten oder Meßgrößen zu identifizieren und ihre Werte in bezug auf den Zustand der Anlage zu verfolgen, zu analysieren und zu interpretieren. Dabei wird das Bedienpersonal üblicherweise von in der Leittechnik der Kraftwerksanlage vorgesehenen Informationsfiltern unterstützt, die archivierte oder für den aktuellen Anlagenzustand relevante Meßdaten oder Meßgrößen zur Anzeige bringen. Die überwiegende Menge der insgesamt erfaßten Meßdaten oder Meßgrößen wird üblicherweise elektronisch protokolliert.

Eine im Anlagenprozeß auftretende Störung führt in der Regel in einer Anzahl von Anlagenteilen zu einer Abweichung des Ist-Zustands vom Soll-Zustand. Für eine Überwachung derartiger Abweichungen geben vorgesehene Detektoren daraufhin Störungsmeldungen ab. Die Störungsmeldungen können - ebenso wie den Anlagenprozeß betreffende Meßwerte oder Meldungen - in der Leitwarte zur Anzeige gebracht werden. Anhand von Meldeelementen ist es dort für das Bedienpersonal möglich, die Störung zu identifizieren.

Den Einfluß der Störung auf den Zustand der Anlage verfolgt, analysiert und interpretiert das Bedienpersonal anhand von funktionstechnischen Beschreibungen der Kraftwerksanlage. Die funktionstechnischen Beschreibungen sind in Form von Funktionsplänen niedergelegt. Die Funktionspläne können insgesamt mehrere 10.000 Seiten umfassen. In den Funktionsplänen ist in Form von Querverweisen und arithmetischen sowie logischen Operationen der Wirkzusammenhang der Anlagenteile hinterlegt.

Allein aufgrund des Umfangs der Funktionspläne ist es für das Bedienpersonal sehr zeitaufwendig und schwierig, bei einer Störung eines Anlagenteils dessen Einfluß und Auswirkung auf den Prozeßablauf zu verfolgen, zu analysieren und zu interpretieren sowie den daraus resultierenden Anlagenzustand zu ermitteln. Zudem kann bei einem Störfall eine Mehrzahl von Anlagenteilen mittelbar oder unmittelbar betroffen sein, so daß mehrere Anlagenteile im Hinblick auf die aufgetretene Störung gleichzeitig den Prozeßablauf beeinflussen und den Anlagenzustand verändern.

Das Bedienpersonal steht somit vor dem Problem, den Störfall ohne direkte offensichtliche Information über mittelbare Auswirkungen der Störung auf den Wirkzusammenhang der Anlagenteile zu beheben. Dazu muß das Bedienpersonal die aufgetretene Störung und die daraus resultierenden Auswirkungen auf den Prozeßablauf erkennen und bewerten. Da die notwendigen Informationen lediglich anhand der Funktionspläne ermittelt werden können, ist eine derartige Analyse jedoch nur mit einem hohen Aufwand und zudem mit hohen Anforderungen an das Bedienpersonal möglich. Darüber hinaus steht das Bedienpersonal gerade bei einem Störfall unter einem enormen Zeitdruck. Ferner hängt diese Analyse sehr stark vom Wissen, der Intuition sowie der momentanen Streßsituation des Bedienpersonals ab.

Der Erfindung liegt daher die Aufgabe zugrunde, ein Verfahren anzugeben, mit dem besonders einfach und schnell ein Prozeßzustand analysiert werden kann. Dies soll eine besonders genaue Abschätzung der Auswirkung einer Störung auf den Gesamtprozeß ermöglichen.

Diese Aufgabe wird erfindungsgemäß gelöst mit einem Verfahren zur Analyse eines Prozeßzustandes einer technischen Anlage, deren Anlagenteile automatisch überwacht und gesteuert werden, bei dem ein ein ausgewähltes Anlagenteil charakterisierender Leistungskennwert anhand von einer Anzahl zu diesem ausgewählten Anlagenteil gehörigen Prozeßsignalen und anhand derjenigen Leistungskennwerte, die den mit dem ausgewählten Anlagenteil in Wirkzusammenhang stehenden anderen Anlagenteilen zugeordnet sind, ermittelt wird.

Die Erfindung geht dabei von der Überlegung aus, daß der Prozeßzustand aus einer Analyse des Zusammenwirkens von den Prozeß charakterisierenden Anlagenteile ermittelt werden kann. Dabei ist das Zusammenwirken oder Wechselwirken der Anlagenteile durch Reaktionen einzelner Anlagenteile in Abhängigkeit von den Reaktionen der jeweiligen einflußnehmenden Anlagenteile bestimmt. Demzufolge ist die Funktion oder die Aufgabe eines jeden Anlagenteils durch den Wirkzusammenhang mehrerer miteinander verschalteter und auf ihn einflußnehmender Anlagenteile abhängig. Dabei kann auf der Grundlage von analytischen Vergleichen, insbesondere softwaretechnisch, für jedes Anlagenteil der aktuelle Ist-Zustand in Abhängigkeit von den einflußnehmenden benachbarten Anlagenteilen bestimmt werden. Mit dem neuen Verfahren ergibt sich nunmehr für das Anlagenteil ein Kennwert, der die Abhängigkeit und den Wirkzusammenhang des Anlagenteils beinhaltet und bewertet.

Um die Auswirkung oder die Einflußnahme des ausgewählten Anlagenteils in jedem von ihm beeinflußten Anlagenteil ermitteln zu können, wird der Leistungskennwert des Anlagenteils mittels eines zugehörigen Analysemoduls an das Anaylsemodul des von ihm beeinflußten anderen Anlagenteils übermittelt. Dies kann beispielsweise über eine Datenübertragungseinheit oder über Querverweise innerhalb eines Rechnerprogramms erfolgen.

Der Wirkzusammenhang der Anlagenteile ergibt sich zweckmäßigerweise aus einer funktionstechnischen Beschreibung. Die funktionstechnische Beschreibung, z.B. Funktionspläne, liegt in einer zur Datenverarbeitung verwertbaren Form vor. Dabei umfaßt jeder Funktionsplan analog zu einem Unterprogramm eines Computerprogramms eine kleine Anzahl von miteinander logisch verknüpften Verfahrensschritten des Anlagenprozesses und somit die Art der Verknüpfung der Anlagenteile.

Um auch in Kraftwerksanlagen mit verteilten oder dezentralen Steuerungs- und Überwachungseinrichtungen den Leistungskennwert des ausgewählten Anlagenteils besonders schnell und leicht ermitteln zu können, wird der Leistungskennwert in der entsprechenden Rechnereinheit des Anlagenteils dezentral ermittelt. Alternativ dazu kann der Leistungskennwert unabhängig von der dezentralen Struktur der Kraftwerksanlage auch zentral bestimmt werden.

Die Durchsetzung globaler Prozeßziele, z.B. Leistungssteigerung, unter der Berücksichtigung veränderlicher Zustände einzelner Anlagenteile, wird durch den Wirkzusammenhang aller das Prozeßziel beeinflussenden Anlagenteile bestimmt. Um beispielsweise für einen Teilprozeß eine zusammengefaßte oder verdichtete Information über dessen Zustand zu erhalten, wird zweckmäßigerweise eine vorgegebene Anzahl von Anlagenteilen zu einer Funktionsgruppe zusammengefaßt. Dabei wird anhand der Leistungskennwerte der Anlagenteile dieser Funktionsgruppe ein Gruppen-Leistungskennwert ermittelt. Der Gruppen-Leistungskennwert ermöglicht dem Bedienpersonal eine besonders leichte und schnelle Beurteilung der Verfügbarkeit der Funktionsgruppe sowie der Auswirkung, die die Funktionsgruppe auf beeinflußte Funktionsgruppen sowie auf den Gesamtprozeß hat.

Um darüber hinaus mit dem Analyseverfahren Auswirkungen von möglichen zukünftigen Störungen oder Ausfällen sowie Fehlerursachen ermitteln zu können, werden der ermittelte Leistungskennwert sowie diejenigen Leistungskennwerte, die den mit dem ausgewählten Leistungskennwert in Wirkzusammenhang stehenden anderen Anlagenteile zugeordnet sind, gespeichert. Je nach Vorgabe des Bedienpersonals werden die gespeicherten Leistungskennwerte dann zur Prognose für einen zukünftigen Leistungskennwert des ausgewählten Anlagenteils herangezogen. Analog dazu wird ebenfalls der ermittelte Gruppen-Leistungskennwert gespeichert. Der gespeicherte Gruppen-Leistungskennwert wird anschließend zur Prognose für einen zukünftigen Gruppen-Leistungskennwert der Funktionsgruppe herangezogen.

Diese Prognosen ermöglichen dem Bedienpersonal, rechtzeitig vor einer Anlagenstörung, bei einem Leistungsabfall oder bei einem Leistungs- oder Verfügungsengpaß Gegenmaßnahmen ergreifen zu können. Darüber hinaus können anhand der Prognosen beabsichtigte Eingriffe und Maßnahmen in den Prozeß auf deren Auswirkungen auf Prozeßablauf und -zustand überprüft werden.

Für eine besonders einfache und zuverlässige Analyse des Prozeßzustandes werden der ermittelte Leistungskennwert und/oder der Gruppen-Leistungskennwert grafisch auf einer Anzeigeeinrichtung, z.B. auf einem Bildschirm oder einer Wartentafel dargestellt. Dies kann beispielsweise durch Balkendiagramme sowie Farbänderungen des das Anlagenteil repräsentierenden Meldeelementes erfolgen.

Die mit der Erfindung erzielten Vorteile bestehen insbesondere darin, daß für das Bedienpersonal durch die Ermittlung des genannten Leistungskennwerts der Wirkzusammenhang und die Einflußnahme der Anlagenteile untereinander und deren Auswirkungen auf einen Teilprozeß sowie auf den Gesamtprozeß bewertet werden. Somit steht eine charakteristische Größe für eine sichere Betriebsführung oder für eine Prognose zur Betriebsführung zur Verfügung. Zudem ist durch die grafische Darstellung der ermittelten Werte eine besonders einfache Verfolgung der Auswirkung einer Störung auf den Prozeßablauf gewährleistet. Darüber hinaus können durch eine Verdichtung der ermittelten Leistungskennwerte mehrerer Anlagenteile zusammenfassende globale Aussagen über den Zustand von Teilprozessen sowie vom Gesamtprozeß gemacht werden.

Ausführungsbeispiele der Erfindung, weitere Ausgestaltungen und Vorteile werden anhand der Zeichnung näher erläutert. Darin zeigen:
- FIG 1: ein Funktionsschema zur Ermittlung mehrerer Leistungskennwerten für eine technische Anlage und
- FIG 2: das Abbild einer Systemstruktur eines Teilprozesses der technischen Anlage mit zur Darstellung von Wirkzusammenhängen in dem Teilprozeß vorgesehenen Komponenten.

Einander entsprechende Teile sind in beiden Figuren mit denselben Bezugszeichen versehen.

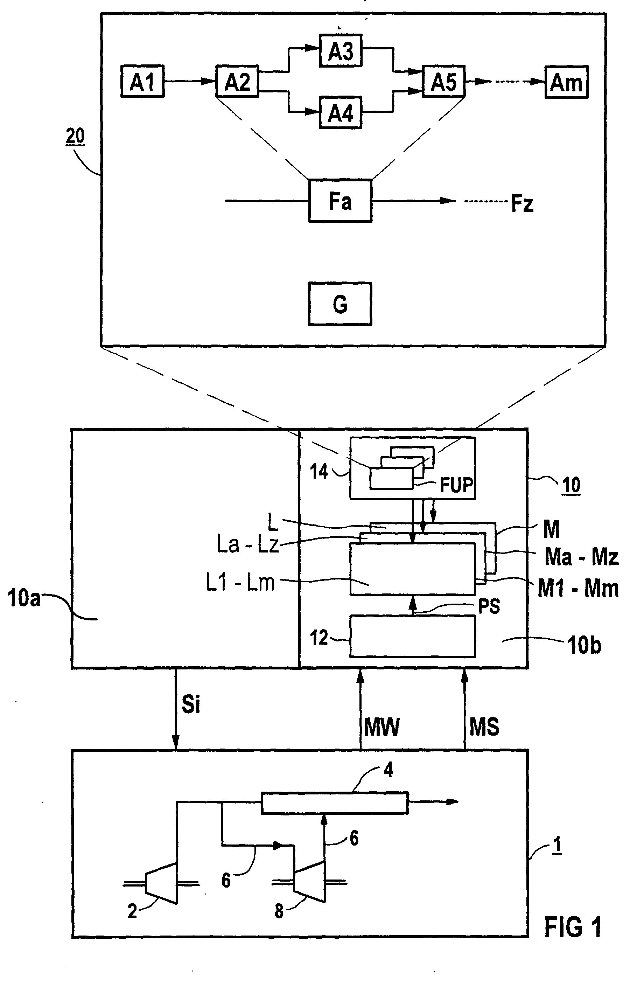

In Figur 1 ist schematisch eine Kraftwerksanlage, speziell eine Gas- und Dampfturbinenanlage 1, die nachfolgend als Gesamtanlage 1 bezeichnet wird, dargestellt. Diese umfaßt eine Gasturbine 2 und einen dieser rauchgasseitig nachgeschalteten Abhitzedampferzeuger 4, dessen Heizflächen in den Wasser-Dampf-Kreislauf 6 einer Dampfturbine 8 geschaltet sind.

Von nicht dargestellten Sensoren erfaßte Meßwerte MW sowie von nicht dargestellten Signalgebern abgegebene Meldesignale MS werden einem Prozeßsystem 10 zugeführt, das sich aus einem Automatisierungssystem 10a und einem leittechnischen Informationssystem 10b zusammensetzt. Das Prozeßsystem 10 kann dabei insbesondere ein Personal Computer oder eine andere Datenverarbeitungseinrichtung sein.

In Automatisierungseinheiten oder Teileinrichtungen des Prozeßsystems 10 der Gesamtanlage 1 werden die Meßwerte MW und die Meldesignale MS vorverarbeitet. Gegebenenfalls werden Steuersignale Si an die Komponenten 2, 4, 6, 8 der Gesamtanlage 1 abgegeben. Durch die innerhalb des Prozeßsystems 10 ablaufenden Prozesse wird die Gesamtanlage 1 automatisch gesteuert und überwacht.

Von dem Prozeßsystem 10 werden anhand der momentan oder online erfaßten Meßwerte MW und Meldesignale MS sowie der Steuersignale Si für den Anlagenprozeß relevante Prozeßsignale PS generiert. Diese Prozeßsignale PS und weitere Informationen über Messungs-, Regelungs- und Steuerungsereignisse sowie über die Signalerzeugung sind im Informationssystem 10b hinterlegt, z.B. in einem Meldungsarchiv 12. In dem Meldungsarchiv 12 sind zum einen der momentane Zustand und zum anderen dynamische Meldungen, z.B. Störungsmeldungen, des Kraftwerksprozesses hinterlegt.

Funktionstechnische Beschreibungen der Gesamtanlage 1 sind in Form von Funktionsplänen FUP in einem Speicherbaustein 14 des Informationssystems 10b elektronisch hinterlegt. Dabei stehen die Funktionspläne FUP in einer für die Datenverarbeitung verwertbaren Form, z.B. in verketteten Datenstrukturen, zur Verfügung. Darüber hinaus umfaßt das Informationssystem 10b eine vorgegebene Anzahl von Analysemodulen M1 bis Mm (m ∈ N), Ma bis Mz, M.

In den einzelnen Funktionsplänen FUP sind der Anlagenprozeß und Teilprozesse der Gesamtanlage 1 als eine Systemstruktur oder Anlagenstruktur 20 abgebildet. Um die Aufgabenstellung für den Anlagenprozeß einfach lösen zu können, ist die Anlagenstruktur 20 in eine ausgewählte Anzahl von Teilfunktionen oder Funktionsgruppen Fa bis Fz und in eine vom Anlagenprozeß abhängige Anzahl von Anlagenteilen A1 bis Am (m ∈ N) zum einfachen Erkennen von Wirkzusammenhängen innerhalb des Anlagenprozesses gegliedert. Beispielsweise stellt die Funktionsgruppe Fa die Komponente Wasser-Dampf-Kreislauf 6 dar, die die Anlagenteile A2 bis A5 umfaßt. Die Anlagenteile A2 bis A5 repräsentieren dabei nicht näher dargestellte Pumpen und Rohre.

Die Anlagenstruktur 20 ist in Form von Querverweisen und arithmetischen sowie logischen Operationen detailliert in den Funktionsplänen FUP hinterlegt. Jedes Anlagenteil A1 bis Am und jede Funktionsgruppe Fa bis Fz kann ebenfalls je nach eigener Struktur eine zugehörige Anzahl von Funktionsplänen FUP im Sinne von Detailplänen oder Untergruppen von Plänen umfassen. Generell können die Funktionspläne FUP durch entsprechende Software-Werkzeuge in eine vereinfachte topologische Struktur für die Darstellung der Anlagenstruktur 20 umgesetzt werden.

Um eine Analyse des Wirkzusammenhangs der Anlagenteile A1 bis Am oder der Funktionsgruppen Fa bis Fz durchführen zu können, wird für jedes Anlagenteil A1 bis Am und für jede Funktionsgruppe Fa bis Fz sowie für die Gesamtanlage 1 ein entsprechendes Analysemodul M1 bis Mm bzw. Ma bis Mz bzw. M generiert. Die Aufgabe jedes Analysemoduls M1 bis Mm, Ma bis Mz, M ist es, einen zugehörigen Leistungskennwert L1 bis Lm (m ∈ N) bzw. La bis Lz bzw. L auf der Basis der zugehörigen Funktionspläne FUP sowie der entsprechenden Prozeßsignale PS zu ermitteln.

Der Zustand des Anlagenteils A5, z.B. einer Pumpe, werde im Wege des Beispiels durch einen gemessenen Druck charakterisiert. Das Analysemodul M5 liest zum einen das entsprechende Prozeßsignal PS aus dem Meldungsarchiv 12 aus und bewertet durch einen Vergleich mit einem hinterlegten Referenz- oder Sollwert den Zustand oder die Qualität des Anlagenteils A5. Diese Qualität kann als eine Prozentangabe von 0 bis 100% oder als eine Kenngröße in einem abgeschlossenen Intervall von 0 bis 1 angegeben sein. Die Bewertung der Qualität des Anlagenteils A5 kann dabei in mehreren Stufen sowie auf der Basis mehrerer Prozeßsignale PS erfolgen und ist eine rein lokale Größe bezogen auf das jeweilige Anlagenteil A5. Darüber hinaus können in die Bewertung der Qualität jeweilige Grenzwerte, z.B. Toleranz-, Warn-, Alarmwerte, der entsprechenden Prozeßsignale PS je nach Bedarf eingebunden werden.

Zum anderen liest das Analysemodul M5 aus den entsprechenden Funktionsplänen FUP die technische Verschaltung - die logische Verknüpfung - des Anlagenteils A5 mit den einflußnehmenden Anlagenteilen A3 und A4. Analog zu der logischen Verknüpfung der Anlagenteile A1 bis Am ergibt sich die logische Verknüpfung der Leistungskennwerte L1 bis Lm.

Von den jeweils zugehörigen Analysemodulen M3 und M4 der einflußnehmenden Anlagenteile A3 bzw. A4 wird der zugehörige Leistungskennwert L3 bzw. L4 an das Analysemodul M5 übermittelt. Das Analysemodul M5 ermittelt anhand der logischen Verknüpfung der Leistungskennwerte L3 und L4 sowie der lokal bewerteten Qualität den entsprechenden Leistungskennwert L5 für das Anlagenteil A5.

Beispielsweise kann eine "oder"-Verknüpfung als eine Maximumbildung der entsprechenden Leistungskennwerte L1 bis Lm, La bis Lz realisiert werden. Die Berechnung für eine "und"-Verknüpfung kann als eine Mittelwertbildung, z.B. als arithmetisches Mittel oder als gewichtete Mittelwertbildung, der entsprechenden Leistungskennwerte L1 bis Lm, La bis Lz realisiert werden. Die lokal bewertete Qualität kann in die Berechnung des Leistungskennwertes L1 bis Lm, La bis Lz als eine Mittelwertbildung oder als Faktor eingehen. Für das Anlagenteil A1 ohne ein vorgeschaltetes Anlagenteil A2 bis Am wird der zugehörige Leistungskennwert L1 lediglich anhand der lokal bewerteten Qualität ermittelt.

Der so ermittelte Leistungskennwert L1 bis Lm, La bis Lz ist dabei ein Maß für die Verfügbarkeit oder die Gefährdung des entsprechenden Anlagenteils A1 bis Am, der Funktionsgruppe Fa bis Fz oder der Gesamtanlage 1 unter Berücksichtigung des Wirkzusammenhangs der Anlagenteile A1 bis Am bzw. der Funktionsgruppen Fa bis Fz.

Mit anderen Worten anhand eines praktischen Falls: Das Anlagenteil A5, die Pumpe, arbeitet aufgrund eines der anstehenden Steuersignale Si noch ausreichend, obwohl der Druck im zufließenden Rohr einen Toleranzwert unterschritten hat. Diese Abweichung fließt in die Ermittlung des Leistungskennwertes L5 der Pumpe ein. Somit erhält das Bedienpersonal schon vor dem Zustandekommen einer Alarmmeldung, einer Störung oder einer schutzbedingten Abschaltung der Pumpe, nämlich über den Leistungskennwert L5, eine Information über die Beeinträchtigung oder die Gefährdung des Anlagenteils A5, nämlich der Pumpe.

Der Leistungskennwert L1 bis Lm, La bis Lz kann nicht nur für ein Anlagenteil A1 bis Am, sondern auch für die Funktionsgruppe Fa bis Fz oder die Gesamtanlage 1 ermittelt werden.

Dazu wird auf der Basis der Systemstruktur 20 eine vorgegebene Anzahl von Anlagenteilen A1 bis Am zu einer Funktionsgruppe Fa bis Fz zusammengefaßt. Anhand der entsprechenden Leistungskennwerte L1 bis Lm der zugehörigen Anlagenteile A1 bis Am wird ein Leistungskennwert oder Gruppen-Leistungskennwert La bis Lz der zugehörigen Funktionsgruppen Fa bis Fz ermittelt. Die Leistungskennwerte L1 bis Lm, La bis Lz können dabei bis zu einem einzigen Leistungskennwert L für die Gesamtanlage 1 verdichtet werden. Je nach Gliederungsgrad der Anlagenstruktur 20 sind weitere Auf- oder Abstufungen in der Ermittlung von Leistungskennwerten L1 bis Lm, La bis Lz, L möglich und demzufolge weitere Analysemodule M1 bis Mm, Ma bis Mz, M erforderlich, die dann ggf. zu generieren sind.

In Abhängigkeit von der Anlagenstruktur 20 sowie des Aufbaus des Prozeßsystems 10 können die Leistungskennwerte L1 bis Lm, La bis Lz, L zentral oder dezentral ermittelt werden. Bei einer sehr verzweigten Gesamtanlage 1, z.B. wenn einige Komponenten 2, 4, 6, 8 mehrere 100m voneinander entfernt sind, werden Teileinrichtungen des Prozeßsystems 10 dezentral in der Gesamtanlage 1 installiert. In einem derartigen Aufbau werden die Leistungskennwerte L1 bis Lm, La bis Lz, L in der jeweiligen dezentralen Teileinrichtung des Informationssystems 10b ermittelt. Die Übertragung der Leistungskennwerte L1 bis Lm, La bis Lz, L erfolgt dann üblicherweise über nicht dargestellte Datenübertragungseinrichtungen, z.B. über Bussysteme. Additiv oder alternativ können die Leistungskennwerte L1 bis Lm, La bis Lz, L selbstverständlich zentral ermittelt werden.

Je nach Vorgabe sind verschiedene Varianten für die Analyse des Prozeßzustandes möglich. Da jeder Leistungskennwert L1 bis Lm, La bis Lz, L über das zugehörige Analysemodul M1 bis Mm, Ma bis Mz, bzw. M ermittelt wird, können beispielsweise in Abhängigkeit von den Vorgaben des Bedienpersonals nur Leistungskennwerte L1 bis Lm, La bis Lz kritischer Anlagenteile A1 bis Am oder Funktionsgruppen Fa bis Fz ermittelt und überwacht werden.

Dazu werden nur die entsprechenden ausgewählten Analysemodule M1 bis Mm, Ma bis Mz aktiviert, die den kritischen Anlagenteilen A1 bis Am oder den kritischen Funktionsgruppen Fa bis Fz zugeordnet sind. Die Analysemodule M1 bis Mm, Ma bis Mz der kritischen Anlagenteile A1 bis Am oder der kritischen Funktionsgruppen Fa bis Fz ermitteln anhand des oben beschriebenen Verfahrens die einflußnehmenden Anlagenteile A1 bis Am bzw. die einflußnehmenden Funktionsgruppen Fa bis Fz. Deren Analysemodule M1 bis Mm, Ma bis Mz werden ebenfalls aktiviert, so daß die jeweiligen Leistungskennwerte L1 bis Lm, La bis Lz an das Analysemodul M1 bis Mm, Ma bis Mz des kritischen Anlagenteil A1 bis Am oder der kritischen Funktionsgruppen Fa bis Fz übermittelt werden kann. Die Aktivierung von Analysemodulen M1 bis Mm, Ma bis Mz wird solange fortgesetzt, bis alle einflußnehmenden Anlagenteile A1 bis Am oder Funktionsgruppen Fa bis.Fz identifiziert sind.

Die Aktivierung der Analysemodule M1 bis Mm, Ma bis Mz, M kann beispielsweise durch das Bedienpersonal per Befehl oder aber auch automatisch durch Auslösung eines Signals im Automatisierungs- oder Informationssystem 10a, 10b erfolgen. Analog hierzu kann eine Deaktivierung der Analysemodule M1 bis Mm, Ma bis Mz, M erfolgen, wenn kein Informationsbedarf besteht.

Eine permanente Überwachung von Teilprozessen oder des gesamten Anlagenprozesses kann durch ständige Aktivierung der entsprechenden bzw. aller Analysemodule M1 bis Mm, Ma bis Mz, M gewährleistet werden.

Auf der Grundlage von gespeicherten Leistungskennwerten L1 bis Lm, La bis Lz, L ist es darüber hinaus möglich, eine Prognose für zukünftige Leistungskennwerte L1 bis Lm, La bis Lz, L des Anlagenteils A1 bis Am und/oder der Funktionsgruppe Fa bis Fz zu ermitteln. Dazu werden die ermittelten Leistungskennwerte L1 bis Lm, La bis Lz, L als Momentan- oder gemittelte Werte in einer nicht dargestellten Speichereinheit des Prozeßsystems 10a bzw. 10b hinterlegt. Auf Basis dieser Vergangenheitswerte in Verbindung mit Erfahrungswerten, Abschätzungen und Annäherungen können dann zukünftig erwartete Leistungskennwerte L1 bis Lm, La bis Lz, L ermittelt oder ggf. simuliert werden. Anhand derartiger Prognosen ist es beispielsweise für das Bedienpersonal möglich, abzuschätzen, welchen Einfluß ein in Revision genommenes Anlagenteil A1 bis Am auf den Prozeßablauf nimmt und wie dieses Anlagenteil A1 bis Am optimal durch Parameteränderungen an anderen Anlagenteilen A1 bis Am ersetzt werden kann.

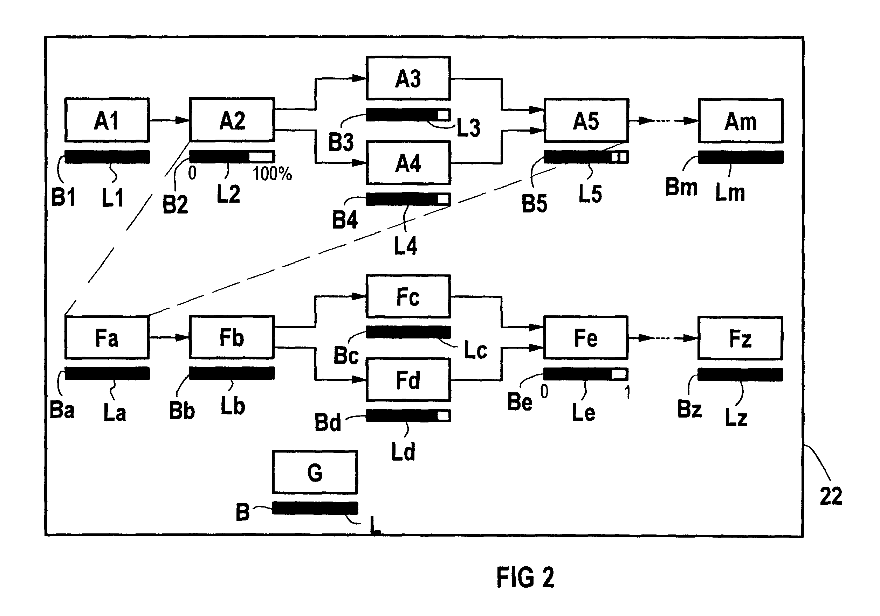

Gemäß Figur 2 ist die oben beschriebenen Anlagenstruktur 20 in Form eines Abbildes 22 des Zustandes der Gesamtanlage 1 dargestellt, wie es beispielsweise in einer nicht dargestellten Leitwarte auf einem Bildschirm oder als Wartenbild angezeigt werden kann.

Die jeweiligen Leistungskennwerte L1 bis Lm, La bis Lz, L des entsprechenden Anlagenteils A1 bis Am oder der Funktionsgruppe Fa bis Fz sind dabei jeweils in Form eines Balkens B1 bis Bm (m ε N), Ba bis Bz, B dargestellt. Alternativ kann anstelle der Balken B1 bis Bm, Ba bis Bz, B auch eine geeignete Farbsignalisierung eingesetzt werden. Dabei ändert das Anlagenteil A1 bis Am oder die Funktionsgruppe Fa bis Fz in der Darstellung seine Farbe in Abhängigkeit vom entsprechenden Leistungskennwert L1 bis Lm, La bis Lz, L. Die Farbe symbolisiert dann den jeweiligen Leistungskennwert L1 bis Lm, La bis Lz, L.

Selbstverständlich sind auch weitere beispielhafte Ausführungsarten nach dem Stand der Technik möglich. So sind weitere Anzeigevarianten am Balken B2 des Anlagenteils A2 sowie am Balken Be der Funktionsgruppe Fe jeweils numerische Angaben für die jeweiligen Leistungskennwerte L2 bzw. Le in Form von 0 bis 100% bzw. 0 bis 1 dargestellt.

Anhand dieses Abbildes 22 ist es dem Bedienpersonal möglich, weit vor Eintreten einer die Leistung der Gesamtanlage 1 einschränkenden Störung die Gefahr für die Gesamtanlage 1 und die davon betroffenen Anlagenteile A1 bis Am oder Funktionsgruppen Fa bis Fz zu erkennen und zu identifizieren.

Selbstverständlich können die Merkmale der aufgezeigten Ausführungen miteinander oder mit Merkmalen aus dem Stand der Technik kombiniert werden, ohne daß der Grundgedanke der Erfindung verlassen wird. Wesentlich hierfür ist, daß eine charakteristische Größe - nämlich der Leistungskennwert L1 bis Lm, La bis Lz, L - zur Verfügung steht, mit der der Wirkzusammenhang und die Einflußnahme der an Teilprozessen oder am Gesamtprozeß beteiligten Einrichtungen bewertet wird.

## Patentansprüche

1. Verfahren zur Analyse eines Prozeßzustandes einer technischen Anlage (1), deren Anlagenteile (A1 bis Am) automatisch überwacht und/oder gesteuert werden, bei dem ein ein ausgewähltes Anlagenteil (A1 bis Am) charakterisierender Leistungskennwert (L1 bis Lm) anhand einer Anzahl von zu diesem ausgewählten Anlagenteil (A1 bis Am) gehörigen Prozeßsignalen (PS) und anhand derjenigen Leistungskennwerte (L1 bis Lm) ermittelt wird, die den mit dem ausgewählten Anlagenteil (A1 bis Am) in Wirkzusammenhang stehenden anderen Anlagenteilen (A1 bis Am) zugeordnet sind.

2. Verfahren nach Anspruch 1, bei dem der Leistungskennwert (L1 bis Lm) des ausgewählten Anlagenteils (A1 bis Am) mittels eines zugehörigen Analysemoduls (M1 bis Mm) an das Analysemodul (M1 bis Mm) des von ihm beeinflußten anderen Anlagenteils (A1 bis Am) übermittelt wird.

3. Verfahren nach Anspruch 1 oder 2, bei dem der Wirkzusammenhang der Anlagenteile (A1 bis Am) anhand einer funktionstechnischen Beschreibung (FUP) vorgegeben wird.

4. Verfahren nach einem der Ansprüche 1 bis 3, bei dem der Leistungskennwert (L1 bis Lm) des ausgewählten Anlagenteils (A1 bis Am) zentral und/oder dezentral ermittelt wird.

5. Verfahren nach einem der Ansprüche 1 bis 4, bei dem eine vorgegebene Anzahl von Anlagenteilen (A1 bis Am) zu einer Funktionsgruppe (Fa bis Fz) zusammengefaßt wird, und bei dem anhand der Leistungskennwerte (L1 bis Lm) der Anlagenteile (A1 bis Am) dieser Funktionsgruppe (Fa bis Fz) ein Gruppen-Leistungskennwert (La bis Lz) ermittelt wird.

6. Verfahren nach einem der Ansprüche 1 bis 5, bei dem der ermittelte Leistungskennwert (L1 bis Lm) sowie diejenigen Leistungskennwerte (L1 bis Lm), die dem mit dem ausgewählten Anlagenteil (A1 bis Am) in Wirkzusammenhang stehenden anderen Anlagenteilen (A1 bis Am) zugeordnet sind, gespeichert werden, und bei dem anhand der gespeicherten Leistungskennwerten (L1 bis Lm) eine Prognose für einen zukünftigen Leistungskennwert (L1 bis Lm) des Anlagenteils (A1 bis Am) ermittelt wird.

7. Verfahren nach Anspruch 5 oder 6, bei dem der ermittelte Gruppen-Leistungskennwert (La bis Lz) gespeichert wird und bei dem anhand des gespeicherten Gruppen-Leistungskennwerts (La bis Lz) eine Prognose für einen zukünftigen Gruppen-Leistungskennwert (La bis Lz) der Funktionsgruppe (Fa bis Fz) ermittelt wird.

8. Verfahren nach einem der Ansprüche 1 bis 7, bei dem der ermittelte Leistungskennwert (L1 bis Lm) auf einer Anzeigeeinrichtung dargestellt wird.

9. Verfahren nach einem der Ansprüche 5 bis 8, bei dem der ermittelte Gruppen-Leistungskennwert (La bis Lz) auf einer Anzeigeeinrichtung dargestellt wird.

## Claims

1. Method for the analysis of a process state of an industrial plant (1), the parts of which plant (A1 to Am) are automatically monitored and/or controlled, in which a performance characteristic (L1 to Lm) that characterizes a selected part of the plant (A1 to Am) is determined by using a number of process signals (PS) which belong to this selected part of the plant (A1 to Am) and by using those performance characteristics (L1 to Lm) which are associated with other parts of the plant (A1 to Am) which have an operative relationship with the selected part of the plant (A1 to Am).

2. Method according to Claim 1, in which the performance characteristic (L1 to Lm) of the selected part of the plant (A1 to Am) is transmitted, by means of an associated analysis module (M1 to Mm), to the analysis module (M1 to Mm) of the other part of the plant (A1 to Am) which is influenced thereby.

3. Method according to Claim 1 or 2, in which the operative relationship between the parts of the plant (A1 to Am) is predefined by using a functional description (FUP).

4. Method according to one of Claims 1 to 3, in which the performance characteristic (L1 to Lm) of the selected part of the plant (A1 to Am) is determined centrally and/or decentrally.

5. Method according to one of Claims 1 to 4, in which a predefined number of parts of the plant (A1 to Am) are combined into a functional group (Fa to Fz), and in which a group performance characteristic (La to Lz) is determined by using the performance characteristics (L1 to Lm) of the parts of the plant (A1 to Am) in this functional group (Fa to Fz).

6. Method according to one of Claims 1 to 5, in which the performance characteristic (L1 to Lm) which is determined, as well as those performance characteristics (L1 to Lm) which are associated with the other parts of the plant (A1 to Am) which have an operative relationship with the selected part of the plant (A1 to Am), are stored, and in which a prognosis for a future performance characteristic (L1 to Lm) of the part of the plant (A1 to Am) is determined by using the stored performance characteristics (L1 to Lm).

7. Method according to Claim 5 or 6, in which the group characteristic (La to Lz) which is determined is stored, and in which a prognosis for a future group performance characteristic (La to Lz) of the functional group (Fa to Fz) is determined by using the stored group performance characteristic (La to Lz).

8. Method according to one of Claims 1 to 7, in which the performance characteristic (L1 to Lm) which is determined is displayed on an indicating device.

9. Method according to one of Claims 5 to 8, in which the group performance characteristic (La to Lz) which is determined is displayed on an indicating device.

## Revendications

1. Procédé d'analyse d'un état des opérations dans une installation (1) technique, dont des parties (A1 à Am) d'installation sont surveillées/ou commandées automatiquement, dans lequel on détermine une valeur (L1 à Lm) caractéristique de puissance, caractérisant une partie (A1 à Am) de l'installation sélectionnée, au moyen d'un certain nombre de signaux (PS) opératoires appartenant à cette partie (A1 à Am) d'installation sélectionnée et au moyen des valeurs (L1 à Lm) caractéristique de puissance qui sont associées aux autres parties (A1 à Am) d'installation coopérant avec la partie (A1 à Am) d'installation sélectionnée.

2. Procédé suivant la revendication 1, dans lequel la valeur (L1 à Lm) caractéristique de puissance de la partie (A1 à Am) d'installation sélectionnée est transmise au moyen d'un module (M1 à Mm) d'analyse correspondant au module (M1 à Mm) d'analyse de l'autre partie (A1 à Am) d'installation qu'il influence.

3. Procédé suivant la revendication 1 ou 2, dans lequel la coopération des parties (A1 à Am) d'installation est prescrite au moyen d'une prescription (FUP) technique de fonctionnement.

4. Procédé suivant l'une des revendications 1 à 3, dans lequel la valeur (L1 à Lm) caractéristique- de puissance de la partie (A1 à Am) d'installation sélectionnée est déterminée de manière centralisée et/ou décentralisée.

5. Procédé suivant l'une des revendications 1 à 4, dans lequel un nombre prescrit de parties (A1 à Am) d'installation est rassemblé en un groupe (Fa à Fz) fonctionnel et dans lequel au moyen des valeurs (L1 à Lm) caractéristique de puissance des parties (A1 à Am) d'installation de ce groupe (Fa à Fz) de fonctions, on détermine une valeur (La à Lz) caractéristique de puissance de groupe.

6. Procédé suivant l'une des revendications 1 à 5, dans lequel on mémorise la valeur (L1 à Lm) caractéristique de puissance qui est déterminée, ainsi que les valeurs (L1 à Lm) caractéristique de puissance qui sont associées aux autres parties (A1 à Am) d'installation coopérant avec la partie (A1 à Am) d'installation sélectionnée et dans lequel au moyen des valeurs (L1 à Lm) de caractéristique de puissance mémorisées, on détermine un pronostic pour une valeur (L1 à Lm) caractéristique de puissance future de la partie (A1 à Am) d'installation.

7. Procédé suivant la revendication 5 ou 6, dans lequel on mémorise la valeur (La à Lz) caractéristique de puissance de groupe qui est déterminée et dans lequel au moyen de la valeur (La à Lz) de caractéristique de puissance de groupe qui est mémorisée, on détermine un pronostic pour une valeur (La à Lz) future caractéristique de puissance de groupe du groupe (Fa à Fz) fonctionnel.

8. Procédé suivant l'une des revendications 1 à 7, dans lequel la valeur (L1 à Lm) caractéristique de puissance qui est déterminée est représentée sur un dispositif d'affichage.

9. Procédé suivant l'une des revendications 5 à 8, dans lequel la valeur (La à Lz) caractéristique de puissance de groupe qui est déterminée est représentée sur un dispositif d'affichage.
